# EUROPEAN PATENT SPECIFICATION

(11) **EP 1 798 509 B1**
(45) Date of publication and mention of the grant of the patent: **24.08.2016**
(21) Application number: 06125582.4
(22) Date of filing: 07.12.2006
(51) Int. Cl.: F24J 3/08, F28D 20/00, F24D 5/00, F24F 5/00

(54) **Ground heat exchanger**
Erdwärmetauscher
Echangeur de chaleur souterrain

(30) Priority: 14.12.2005 PL 37842405; 06.11.2006 PL 38099006
(43) Date of publication of application: 20.06.2007
(73) Proprietor: Krzysztof Cwik Pro-Vent Systemy Wentylacyjne, 47-300 Krapkowice (PL)
(72) Inventor: Cwik, Krzysztof, 45-759, Opole (PL)
(74) Representative: Karcz, Katarzyna

(56) References cited:
- DE-A1- 1 926 554
- DE-A1- 2 241 836
- DE-A1- 2 930 426
- DE-A1- 10 043 288
- DE-A1- 19 825 903
- US-A- 4 127 973
- US-A- 4 321 962
- US-A- 4 323 113
- US-A- 4 674 561
- US-A1- 2004 216 479

## Description

The invention relates to a ground heat exchanger utilizing the geothermal energy of the ground in which the heat exchanger is seated at a certain depth. The heat exchanger may constitute an element of a ventilation system of an apartment or office/factory building, in which a collector directs the process air to the ventilation system of the building.

From Polish patent application No. 119749 a cooling/heating device is known employing the heat energy of the ground for cooling or heating the air. The device comprises vertical air intakes made in the ground, preferably in the form of wells. Lower ends of the wells are connected to a collecting chamber via conduits seated in a layer of the ground, or via a layer of the ground having small flow resistance and good thermal conductivity. The collector of the exchanger is composed of conduits with circular cross-section, laid in a layer of the ground and also connected to the collecting chamber. The collecting chamber is connected to a technological device, such as an air-cooled liquefier, cooler of water, an air-conditioning or ventilation device.

The cited invention allows for significant energy savings, particularly during periods of maximum or minimum temperature of the atmospheric air.

Another embodiment of a system for heating and ventilation of a building is known from PCT/SE95/00569. According to that invention, a building has a peripheral foundation wall or has peripheral foundation beams, on which external walls and the floor of the building rest, the floor defining the residential floor areas in the building. A room is situated below the floor within the contour of the foundations. Openings or apertures - circulation conduits are made in the floor, through which air of desired parameters is circulated from the room below the floor to dwellings of the building. An air chamber is located below the floor slab, the air chamber being connected to the conduit directing the air. The chamber is closed with a membrane in a form of a tight barrier made from a plastic material. The membrane is seated on a porous layer, which is air-permeable, the layer having a form of a gravel prime coat and being situated at least on the portion of the support area of the ground below the foundation wall.

Document US,127,973 presents a solar-heated concrete slab building structure in which the air within the building structure transfers heat, particularly heat entering glassed walls and impinging directly upon the surface of the concrete slab, by thermal siphon or forced air circulation, to and from the concrete slab. The function of this heat exchanger is to warm up or cool the air circulating within the building structure. Specifically, in this solution it is not possible that any moisture exchange takes place between the circulating air and the gravel layer (anyway, the circulating internal air is not cooled below the condensation point). Also, the described system must necessarily be located directly underneath the building structure and it must be thermo-isolated from the virgin soil located below and surrounding the building on its sides.

Document DE 100 43 288 describes an integrated system for heating, conditioning and cooling of the air in rooms of buildings. A heating and/or cooling circuit of coils comprising heating/cooling fluid is integrated in the floor of a building room. The air circulating in the empty spaces under the floor is heated or cooled by the fluid circulating in the coils. Obviously, the system is not in contact with the ground below the building.

According to the invention a ground heat exchanger is provided, utilizing the thermal energy of the ground, located on a foundation of a layer of air-permeable materials having good thermal conductivity, formed on the virgin soil, the layer being horizontal and/or slightly inclined relative to the horizontal, the ground exchanger comprising a delivery pipe conduit, air circulation channels mounted within the heat exchanger and a collecting channel, wherein the delivery pipe conduit is connected to an external air intake and the collecting channel is connected to the ventilation system of a building, the channels being confined from above by a support slab with spacer elements coupled to a construction net seated on a stabilizing net covering the layer of air-permeable materials, the heat exchanger being covered on top by an insulating layer.

Preferably the layer of air-permeable materials has a form of a gravel prime coat and/or a square stone prime coat and is filled with sand, its length being bigger than the length of the support slab or its portion.

The collecting channel is preferably connected to the ventilation system of the building via an exhaust channel, the air intake and the exhaust channel being provided with a temperature sensor, a humidity sensor, and a flow rate sensor encased therein.

The heat exchanger may preferably comprise a process air collector delimited by an air-distributing element and a plane defined by the bottom of the channels, the said process air collector being coupled with the circulation channels, the cross-section of the element having a shape of any curve or any geometric figure having various optional support points on the side of the inlet of the process air and various optional support points on its opposite side, its length being conditioned by technological parameters of the air flowing therethrough.

The cross-section of the air-distributing element preferably has the shape of a sector of a circle.

Preferably, the cross-section of the air-distributing element has its support point situated on the plane defined by the bottom of the channels and the element has openings on the side of the inlet of the process air.

In another embodiment, the cross-section of the air-distributing element has its support point on the side opposite to the air inlet side situated above the plane defined by the bottom of the channels, or on said plane, or below said plane.

The plane defined by the bottom of the channels may be formed by a foundation slab consisting of a ferroconcrete and/or concrete slab with openwork openings, and/or by the stabilizing net.

Preferably, the air-distributing element is made of metal or polypropylene and/or thermoplastic material.

The inner surface of the air-distributing element is preferably lined with a coat of an antistatic agent and/or a coat of an antibacterial agent, and sensors of temperature, pressure, and flow rate of the process air are mounted in the air-distributing element, and an a process air moistener is mounted within the air-distributing element axially and longitudinally on the plane defined by the bottom of the channels, a UV light source and iodine micronutrients dispensers are located along the air moistener.

Preferably, the cross-section of the air-distributing element has its support point on its air inlet side situated above the plane defined by the bottom of the channels and its other support point on its opposite side situated on said plane, the footings of the air-distributing element being seated in a channel tray with straining-sealing elements, the channel tray being seated indirectly on a spacer bracket, preferably in a form of a T-bar and/or another bearing structure.

The spatial position of the air-distributing element and its optional support arrangements (the various support points of the air-distributing element cross-section relative to the airflow plane), are of fundamental importance for the technological and strength properties.

According to the invention, the air introduced into the building dwellings flows peripherally around the floor creating the appropriate air circulation. By directing the exhaust through the foundations of the building and heating up its lower portions, detrimental moistening of the building and the foundations may be avoided.

The structure of the ground heat exchanger according the invention guarantees the contact of the whole volume of the circulating air directly with the ground. By the use of the heat exchanger equipped with the process air collector according to the invention significant savings of heating, investment and operation costs may be obtained and a desired microclimate of the ventilated building may be preserved.

The ground heat exchanger according to the invention, installed outside the ventilated building may constitute a very good and recommended supplement for a ventilation system of a detached house.. The heat exchanger employs the phenomena of the constancy of the year-round ground temperature (at a level of about 10°C) at a depth of 6 to 10 m below the ground surface.

The invention will be better appreciated by reading the following description of preferred embodiment in conjunction with accompanying drawings of which:
Fig. 1 shows a segment of the ground heat exchanger according to the invention in a cross-sectional view.
Fig. 2 shows a joint of the process air collector with the ground heat exchanger in a cross-sectional view.
Fig. 3 shows a cross-sectional view of an air-distributing element.
Fig. 4 shows a mounting of the air-distributing element footing in a channel tray.
Fig. 5shows a cross-sectional view of the air-distributing element.
Fig. 6shows a cross-sectional view of the process air collector in the case of the air-distributing element having a form of a circular sector and the airflow plane being a foundation slab.
Fig. 7 shows a cross-sectional view of the encased air-distributing element.
Fig. 8 shows the air-distributing element in an axonometric projection.

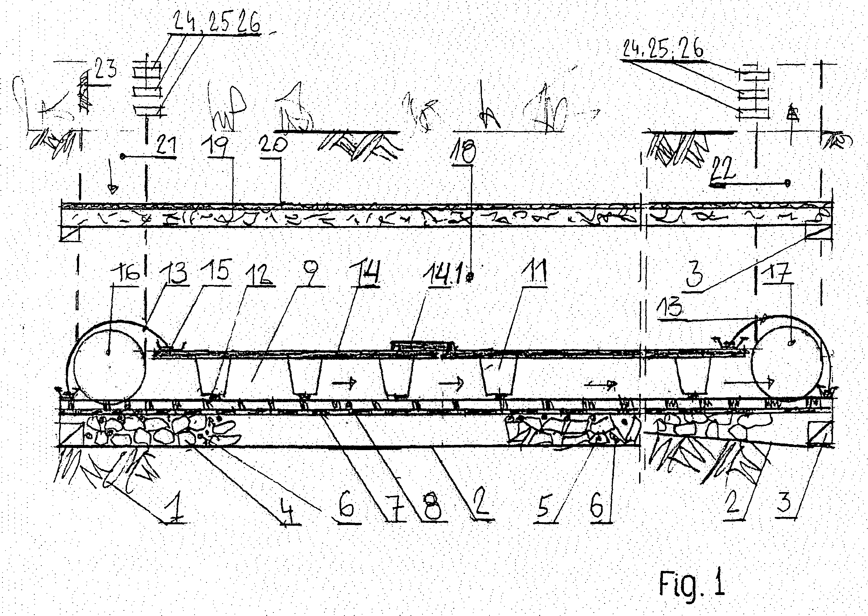

As shown in Fig. 1, the ground heat exchanger according to the invention is located in an excavation at an optimal technological depth, necessarily above the ground water level. As it results from Fig. 1, properly compacted virgin soil 1 defines a surface 2 constituting a foundation of the heat exchanger. The surface 2 is positioned horizontally or is slightly inclined relative to the horizontal direction in the appropriate direction. The direction of the inclination of the surface 2 relative to the surface of the virgin soil 1 depends on the mutual position and the whole configuration of the exchanger.

A layer of air-permeable materials, eg. a gravel layer 4, poured loosely without compaction, is laid onto the surface 2. Dimensions of the gravel grains increase from the surface 2 and range from 5 to 20 mm. Square stone or grit layer 5may be employed instead of the gravel layer. Thickness of the layer 4 and 5 is about 20 to 60 cm, this resulting from calculation of the efficiency of the heat exchanger according the invention. Free spaces in the gravel layer 4 as well as in the square stone layer 5 should be filled with rinsed sand 6. The sand 6 fills the free spaces between the gravel grains or stones increasing the thermal conductivity of the air-permeable materials. So formed layer exhibits good thermal conductivity and small airflow resistance.

A stabilizing net 7 made from a thermoplastic material is laid on the layer 4 or 5 of the aggregate. The shapes and dimensions of the meshes of the net 7 depend on the employed aggregate, preferably the dimensions should be smaller than the dimensions of the grains of the aggregate the net rests on, the mesh dimension being 10 mm, for example. A construction net 8 with ca. 20 - 70 mm meshes is freely laid on the net 7, to transfer the load of the remaining structure of the heat exchanger and soil layers 18 onto the virgin soil 1.

The basic element of the heat exchanger is a circulation channel 9, the height of which is constant and dimensioned by the module size - the efficiency of the exchanger. The channel 9 is confined by the net 8 on one side and by a support slab 14. The support slab 14 rests on the net 8 via a spacer element 11. The spacer element 11 is joined to the net 8, for example by welding of plastic elements. The support slab 14 has the appropriate length, and for preserving the modularity of the heat exchanger the support slabs 14 may mutually overlap 14.1. For example, the channel 9 has a height from 20 to 40 mm for given size of the module and technological parameters of the exchanger, for example for the air flow rate of 1.0 - 3.0 m/s.

The support slab 14 is a basic and a repeatable module of the exchanger. Exemplary size of the slab 14 is 1.9 x 1.9 m and for the air flow rate of the order of 400 m³/h nine such slabs 14 should be mounted in the exchanger. The cross-sections of the spacer elements 11 may have the shape of any geometrical figure. Most preferably, the shape is a trapezoid, the lower base of which, i.e. the shorter side 12, is joined inseparably to the net 8, creating a stiff spatial supporting structure with the slab 14. The number of the elements 11 and the positions of on the slab 14 as well as their dimensions depend on the load transferred by the exchanger. Channel trays 15 are mounted at the ends of the slab 14 and on the net 7, in which the endings of the air-distributing elements 13 are located, while a pipe 16 delivering the air to the channel 9 is placed within the element 13.

An appropriate soil layer 18 is laid onto the exchanger formed as described above with a technological insulating layer 19 on top, in order to uplift the isotherms of 8 - 12°C. Most preferably, the layer 19 is made from foamed polystyrene, and a film 20 made from a plastic material is placed on the layer 19. The layer 19 and the film 20 play a role of an insulator eliminating the temperature difference.

An air intake 21 is formed above the ground level and equipped with a filter 23, most preferably a non-woven filter, for removing dust and allergens. The air intake 21 and an exhaust channel 22 are equipped with temperature sensors 24, flow rate sensors 25 and humidity sensors 26.

The external air is taken, for example, by a metal air intake 21 equipped with a nonwoven air filter, at least of a class EU3. Next, the air is flowing into the element 13, having a semicircle shape in this embodiment, being the ceiling for the flowing air. From below, the air has a direct contact with the layer of the gravel layer 4 or square stone layer 5 filled with sand 6. In the channel 9 the essential exchange of heat and humidity between the flowing air and the gravel and/or stones 5 covered with sand 6 occurs. Then, the air is collected to the collecting channel 17 and further to the ventilation system of the building. The flow rate of the air flowing through the air exchanger segment is of the order of 1.0 - 3.0 m/s. The number of segments for an individual air exchanger is selected basing on the planned efficiency of the exchanger. The amount of the flowing air should be divided by 20 - 40 m³ per one segment for 24 hours per day of operation of the exchanger. For example, for the flow rate of 400 m³/h nine segments should be employed.

Research and tests confirmed the extraordinary efficiency of the inventive heat exchanger. For example, for an exchanger seated at a depth of 6 - 7 m, the air is heated by 2 - 6°C and is humidified by the humidity coming from the ground to 80 - 92% at an ambient temperature of -20°C. The humidity of the air, after heating up in the building to about 20°C, is in the range of 30 - 35%. On the other hand, during summer heat, the air is cooled down, for example from 34°C to a temperature of 15 - 17°C and the air humidity is increased from 55% to 98 - 100%. The humidity of the air introduced to a building is of the order of 55% for 26°C. The condensate produced during the cooling process enters directly the ground or is drained from the surface 2 of the prime coat and the layer 19 via drainage pipes 3. As research and tests showed, the maximum amount of the condensate is 0.8 l/m² of the segment area, this giving an amount of 6 to 10 liters per 24 hours of operation.

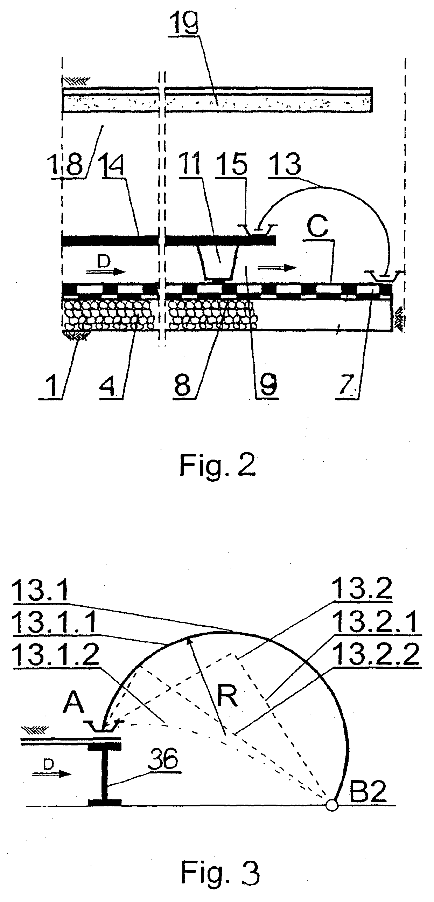

The collector of the process air, as shown in Fig. 2, is delimited generally by two portions, mutually dependent and coupled technologically, these being a plane C of the flow of the process air D and an "upper" exchangeable encasing element in a form of the air-distributing element 13. The plane C is created indirectly by the stabilizing net 7 mounted on the construction net 8. In the case of different technologies of the air processing, the same plane C may be created by a foundation slab 10.

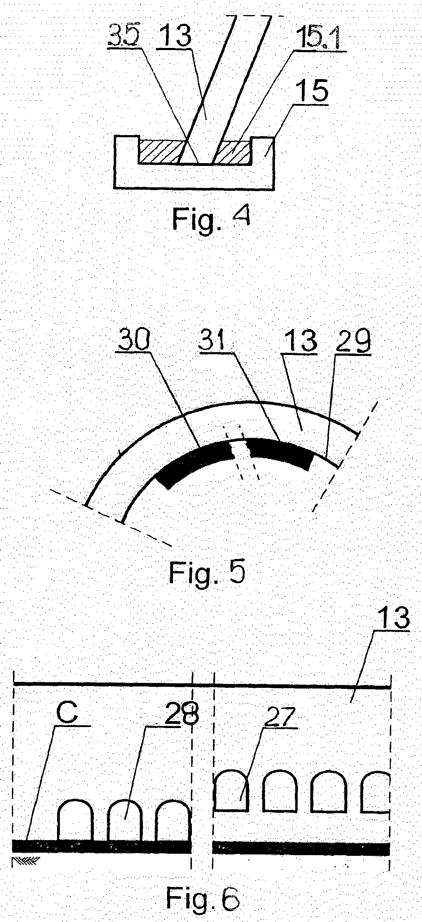

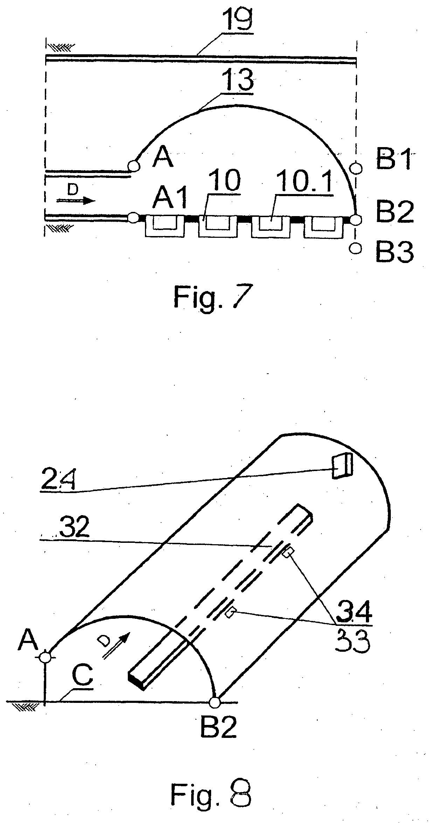

The element 13, due to the employed construction material, i.e., a metal, as well as due to the size of the collector, takes various shapes, shown in a cross-sectional view in Fig. 3. Preferably, the element 13 is made of a plastic material, particularly polypropylene and/or a thermoplastic material. Therefore, its cross-section is a sector of any curve 13.1 or any figure 13.2 and is confined from the side of the air inlet D by a support point A and an opposite support point B. Exemplary curves 13.1 are circular sector 13.1.1 or ellipse sector 13.1.2, and geometrical figure sectors are rectangular sector 13.2.1 or triangle sector 13.2.2. The foundation slab 10 may have the form of a ferroconcrete or concrete slab with openwork openings 10.1. The structure of the slab 10 depends on the operation mode of the collector and technological demands imposed on the parameters of the process air D. In a preferred exemplary embodiment, with the element 13 having the cross-section shaped as a circular sector 13.1, the mutual position of the points A and B may be diversified, as shown in Fig. 7. As it is apparent from the figure, the point A may be situated above the plane C, the point A1 may be situated on the plane C, the point B1 may be situated above the plane C, the point B2 on the plane C, while the point B3 may be situated on an appropriate structure mounted below the plane C. Fig. 6 shows an embodiment of the invention, in which the point A1 is situated in the plane C, this requiring that "closed" openings 27 and/or "open" openings are provided in the element 13 on the side of the air D inlet, allowing the desired amount of the process air D to enter the element 13. Fig. 5 shows the encasement of the inner surface 29 of the element 13, which is lined with an antistatic agent 30 and/or antibacterial agent 31.

The technological demands imposed by standards for the process air D require that a proper number and a proper configuration of technological temperature sensors 24, as well as pressure, humidity and flow rate sensors are mounted in the element 13. Also, Fig. 8 shows a moistener 32 placed within the element 13, axially and longitudinally on the plane C, and a UV light source 33 and an iodine micronutrients dispenser are located along the air moistener 34.

The load of the soil layer 18 is transferred by the element 13, and therefore one of a plurality of possible solutions of mounting two footings 35 of the element 13 in a channel tray 15 have been elaborated. The channel tray 15, as shown in Fig. 4, comprises straining-sealing elements 15.1, which allow for controlled movement of the footing 35 under the loads, preserving water tightness and stable stiffness of the element 13. Depending on the position of the points A, A1 and B1, B2, B3, the tray 15 may be mounted indirectly on a spacer bracket 36, e.g., a ferroconcrete footing for the points B1, B2, B3.

As already mentioned above, Fig. 2 shows a cross-section of a sector of the ground heat exchanger, from which the process air is flowing out, to a user via the process air collector according to the invention. A layer of a height 3 - 10 cm is properly laid on the virgin soil 1 and a gravel layer 4 of a height 3 - 10 cm, on which the construction net 8 and the stabilizing net 7 rest, defining the plane C. The support slab 14 is supported by a bracket - spacer element 11, the space, as already explained in reference to Fig. 1, defining the circulation channel 9 for the process air D, of a height in the range 2 - 5 cm. The slab 14, preferably made from polypropylene, transfers the load of the channel tray 15, playing a role of a guide via the spacer bracket 36, to the virgin soil 1. Preferably, the spacer bracket 36 has T-bar cross-section; however, due to strength considerations it may take different shapes, such as close sections, for example. Here, in the described structure of the process air collector, the element 13 has a shape of a circular sector 13.1.1 with a diameter of 30 - 80 cm, and its modular length is preferably 100 cm. A layer of soil 18 of a thickness more than 15 cm is located above the element 13, "encased" below the insulating layer 19 made from foamed polystyrene as the insulation for the ground isotherm.

The application of the ground heat exchanger according to the invention in the Polish climatic zone and similar zones is advantageous both in summer and winter. During summer heats it enables the use of the coolness of the ground for lowering the air temperature to the levels allowing for effective dehumidification of the air delivered to the building.

During the season of heating, the fresh air is initially heated in the heat exchanger and is humidified by the direct contact with the ground. The plastic material used to build the heat exchanger forms a proper the stream of the air. The materials of the slabs and the nets are thermoplastic with an addition of an antibacterial agent based on silver and/or gold oxides. Besides lowering the heating costs, the heat exchanger according to the invention improves the microclimate inside the ventilated building because it prevents excessive drying of the air in winter.

## Claims

1. A ground heat exchanger utilizing the thermal energy of the ground, located on a layer (4) of air-permeable materials having good thermal conductivity, formed on the virgin soil (1), the layer (4) being horizontal and/or slightly inclined relative to the horizontal, the ground exchanger comprising a delivery pipe conduit (16), air circulation channels (9) mounted within the heat exchanger and a collecting channel (17), wherein the delivery pipe conduit (16) is connected to an external air intake (21) and the collecting channel (17) is connected to the ventilation system of a building, the channels (9)being confined from above by a support slab (14) with spacer elements (11) coupled to a construction net (8) seated on a stabilizing net (7) covering the layer (4) of air-permeable materials, the heat exchanger being covered on top by an insulating layer (19).

2. The heat exchanger according to claim 1, **characterized in that** the layer (4) of air-permeable materials has a form of a gravel prime coat and/or a square stone prime coat and is filled with sand (6), its length being bigger than the length of the support slab (14) or its portion.

3. The heat exchanger according to claim 1, **characterized in that** the collecting channel (17) is connected to the ventilation system of the building via an exhaust channel (22), the air intake (21) and the exhaust channel (22) being provided with a temperature sensor (24), a humidity sensor (26), and a flow rate sensor (25) encased therein.

4. The heat exchanger according to claim 1, **characterized in that** it comprises a process air collector delimited by an air-distributing element (13) and a plane (C) defined by the bottom of the channels (9), the said process air collector being coupled with the circulation channels (9), the cross-section of the element (13) having a shape of any curve (13.1) or any geometric figure (13.2) having a support point (A) or (A1) on the side of the inlet of the process air (D) and a support point (B1) or (B2) or (B3) on its opposite side. its length being conditioned by technological parameters of the air flowing therethrough.

5. The heat exchanger according to claim 4, **characterized in that** the cross-section of the element (13) has the shape of a sector of a circle (13.1.1).

6. The heat exchanger according to claim 4 or 5, **characterized in that** the cross-section of the element (13) has the support point (A1) situated on the plane (C) and the element (13) has openings (27, 28) on the side of the inlet of the process air (D).

7. The heat exchanger according to any of claims 4 to 6, **characterized in that** the cross-section of the element (13) has the support point (B1) situated above the plane (C), or the support point (B2) situated on the plane (C), or the support point (B3) situated below the plane (C).

8. The heat exchanger according to claim 4, **characterized in that** the plane (C) is formed by a foundation slab (10) consisting of a ferroconcrete and/or concrete slab with openwork openings (10.1), and/or by the stabilizing net (7).

9. The heat exchanger according to claim 4, **characterized in that** the element (13) is made of polypropylene and/or thermoplastic material.

10. The heat exchanger according to claim 4, **characterized in that** the inner surface (29) of the element (13) is lined with a coat (30) of an antistatic agent and/or a coat (31) of an antibacterial agent, and sensors of temperature, pressure, and flow rate of the process air (D) are mounted in the element (13), and an a process air moistener (32) is mounted within the element (13) axially and longitudinally on the plane (C), a UV light source (33) and iodine micronutrients dispensers (34) are located along the air moistener (32).

11. The heat exchanger according to claim 5, **characterized in that** the cross-section of the element (13) has the support point (A) situated above the plane (C) and the support point (B2) situated on the plane (C), the footings (35) of the element (13) being seated in a channel tray (15) with straining-sealing elements (15.1), the channel tray (15) being seated indirectly on a spacer bracket (36), preferably in a form of a T-bar and/or another bearing structure.

## Patentansprüche

1. Bodenwärmetauscher, der Thermalenergie des Bodens verwendet, auf einer Schicht (4) aus luftdurchlässigen Materialien, die eine gute Wärmeleitfähigkeit aufweisen angeordnet ist, gebildet auf dem jungfräulichen Boden (1), wobei die Schicht (4) horizontal und/oder leicht geneigt gegenüber der Horizontalen ist, wobei der Bodenwärmetauscher eine Lieferrohrleitung (16), Luftzirkulationskanäle (9), die innerhalb des Wärmetauschers befestigt sind, und einen Sammelkanal (17) aufweist, wobei die Lieferrohrleitung (16) an einen externen Lufteinlass (21) angeschlossen ist und der Sammelkanal (17) an den Belüftungssystem eines Gebäudes angeschlossen ist, wobei die Kanäle (9) von oben über eine Stützplatte (14) mit Distanzelementen (11) begrenzt sind, die mit einem Konstruktionsnetz (8) gekoppelt sind, das auf einem Stabilisierungsnetz (7) angeordnet ist, das die Schicht (4) aus luftdurchlässigen Materialien bedeckt, wobei der Wärmetauscher durch eine Isolationsschicht (19) auf der Oberseite bedeckt wird.

2. Wärmetauscher nach Anspruch 1, **dadurch gekennzeichnet, dass** die Schicht (4) aus luftdurchlässigen Materialien die Form eines Kies-Grundierungsüberzugs und/oder eines quadratischen steinernen Grundierungsüberzugs hat und mit Sand (6) gefüllt ist, dessen Länge größer als die Länge der Stützplatte (14) oder deren Teil ist.

3. Wärmetauscher nach Anspruch 1, **dadurch gekennzeichnet, dass** der Sammelkanal (17) an das Belüftungssystem eines Gebäudes über einen Abgaskanal (22) angeschlossen ist, wobei der Lufteinlass (21) und der Abgaskanal (22) mit einem Temperatursensor (24), einem Feuchtigkeitssensor (26) und einem darin eingeschlossen Strömungsratensensor (25), versehen sind.

4. Wärmetauscher nach Anspruch 1, **dadurch gekennzeichnet, dass** er einen Prozessluftsammler umfasst, der durch ein Luftverteilungselement (13) und eine Ebene (C), die durch den Boden der Kanäle (9) definiert ist, begrenzt ist, wobei der genannte Prozessluftsammler mit den Zirkulationskanälen (9) gekoppelt ist, wobei der Querschnitt des Elements (13) die Form einer beliebigen Kurve (13.1) oder beliebigen geometrischen Figur (13.2) mit einem Auflagepunkt (A) oder (A1) auf der Seite des Einlasses der Prozessluft (D) und einem Auflagepunkt (B1) oder (B2) oder (B3) auf seiner gegenüberliegenden Seite aufweist, wobei seine Länge durch technologische Parameter der durchströmenden Luft bedingt wird.

5. Wärmetauscher nach Anspruch 4, **dadurch gekennzeichnet, dass** der Querschnitt des Elements (13) die Form eines Sektors eines Kreises (13.1.1) hat.

6. Wärmetauscher nach Anspruch 4 oder 5, **dadurch gekennzeichnet, dass** der Querschnitt des Elements (13) den Auflagepunkt (A1) hat, der sich auf die Ebene (C) befindet und das Element (13) Öffnungen (27, 28) auf der Seite des Einlasses der Prozessluft (D) hat.

7. Wärmetauscher nach einem der Ansprüche 4 bis 6, **dadurch gekennzeichnet, dass** der Querschnitt des Elements (13) den Auflagepunkt (B1), der sich oberhalb der Ebene (C) befindet, oder den Auflagepunkt (B2), der sich auf der Ebene (C) befindet oder den Auflagepunkt (B3), der sich unterhalb der Ebene (C) befindet, hat.

8. Wärmetauscher nach Anspruch 4, **dadurch gekennzeichnet, dass** die Ebene (C) durch eine Fundamentplatte (10), bestehend aus einer Stahlbeton- und/oder Betonplatte mit durchbrochenen Öffnungen (10.1), und/oder durch das Stabilisierungsnetz (7) gebildet ist.

9. Wärmetauscher nach Anspruch 4, **dadurch gekennzeichnet, dass** das Element (13) aus Polypropylen und/oder aus dem thermoplastischen Material besteht.

10. Wärmetauscher nach Anspruch 4, **dadurch gekennzeichnet, dass** die Innenfläche (29) des Elements (13) mit einem Überzug (30) aus einem antistatischen Mittel und/oder einem Überzug (31) aus einem antibakteriellen Mittel beschichtet ist, und die Temperatur-, Druck- und Prozessluft-Strömungsratensensoren (D) in dem Element (13) angebracht sind, und eine Prozessluft-Anfeuchtungsvorrichtung (32) innerhalb des Elements (13) in Axial- und in Längsrichtung an der Ebene (C) angebracht ist, eine UV-Lichtquelle (33) und Jod-Mikronährstoffspender (34) entlang der Luftanfeuchtungsvorrichtung (32) angeordnet sind.

11. Wärmetauscher nach Anspruch 5, **dadurch gekennzeichnet, dass** der Querschnitt des Elements (13) den Auflagepunkt (A) oberhalb der Ebene (C) und den Auflagepunkt (B2) auf der Ebene (C) hat, wobei die Fundamente (35) des Elements (13) in einer Kanalwanne (15) mit Spann-Dichtelementen (15.1) angeordnet sind, wobei die Kanalwanne (15) indirekt auf einem Abstandhalter (36), vorzugsweise in Form eines T-Balkens und/oder einer anderen Lagerstruktur angeordnet wird.

## Revendications

1. Échangeur de chaleur géothermique utilisant l'énergie thermique du sol, situé sur une couche (4) de matériaux perméables à l'air ayant une bonne conductivité thermique, formée sur le sol vierge (1), la couche (4) étant horizontale et / ou légèrement inclinée par rapport à l'horizontale, l'échangeur géothermique comprenant un conduit de tuyau d'alimentation (16), des canaux de circulation d'air (9) montés au sein de l'échangeur de chaleur et un canal collecteur (17), dans lequel le conduit de tuyau d'alimentation (16) est relié à une prise d'air extérieur (21) et le canal collecteur (17) est relié au système de ventilation d'un bâtiment, les canaux (9) étant délimités au-dessus par une dalle de soutien (14) avec des éléments d'espacement (11) couplés à un filet de construction (8) assis sur un filet de stabilisation (7) recouvrant la couche (4) de matériaux perméables à l'air, l'échangeur de chaleur étant recouvert sur le dessus par une couche d'isolation (19).

2. Échangeur de chaleur selon la revendication 1, **caractérisé en ce que** la couche (4) de matériaux perméables à l'air a une forme d'une couche de fond de gravier et / ou une couche de fond de pierre carrée et elle est remplie de sable (6), sa longueur étant plus grande que la longueur de la dalle de soutien (14) ou de sa partie.

3. Échangeur de chaleur selon la revendication 1, **caractérisé en ce que** le canal collecteur (17) est relié au système de ventilation du bâtiment par l'intermédiaire d'un canal d'échappement (22), la prise d'air (21) et le canal d'échappement (22) étant munis d'un détecteur de température (24), un détecteur d'humidité (26), un détecteur de débit (25) qui sont y enfermés.

4. Échangeur de chaleur selon la revendication 1, **caractérisé en ce qu'**il comprend un collecteur d'air de processus délimité par un élément de répartition d'air (13) et un plan (C) défini par le fond des canaux (9), ledit collecteur d'air de processus étant couplé aux canaux de circulation (9), la section transversale de l'élément (13) ayant une forme d'une courbe quelconque (13.1) ou d'une figure géométrique quelconque (13.2) ayant un point de soutien (A) ou (A1) sur le côté de l'entrée de l'air de processus (D) et un point de soutien (B1) ou (B2) ou (B3) sur son côté opposé, sa longueur étant conditionnée par des paramètres technologiques de l'air qui y circule.

5. Échangeur de chaleur selon la revendication 4, **caractérisé en ce que** la section transversale de l'élément (13) a la forme d'un secteur d'un cercle (13.1.1).

6. Échangeur de chaleur selon la revendication 4 ou 5, **caractérisé en ce que** la section transversale de l'élément (13) a le point de soutien (A1) situé sur le plan (C) et l'élément (13) a des ouvertures (27, 28) sur le côté de l'entrée de l'air de processus (D).

7. Échangeur de chaleur selon l'une quelconque des revendications 4 à 6, **caractérisé en ce que** la section transversale de l'élément (13) a le point de soutien (B1) situé au dessus du plan (C) ou le point de soutien (B2) situé sur le plan (C), ou le point de soutien (B3) situé au dessous du plan (C).

8. Échangeur de chaleur selon la revendication 4, **caractérisé en ce que** le plan (C) est formé par une dalle de fondation (10) constituée par une dalle en béton et / ou béton armé avec des ouvertures ajourées (10.1), et / ou par le filet de stabilisation (7).

9. Échangeur de chaleur selon la revendication 4, **caractérisé en ce que** l'élément (13) est réalisé en polypropylène et / ou en matière thermoplastique.

10. Échangeur de chaleur selon la revendication 4, **caractérisé en ce que** la surface intérieure (29) de l'élément (13) est bordée d'un revêtement (30) d'un agent antistatique et /ou d'un revêtement (31) d'un agent antibactérien, et des détecteurs de température, de pression et de débit de l'air de processus (D) sont montés dans l'élément (13), et un humidificateur d'air de processus (32) est monté à l'intérieur de l'élément (13) axialement et longitudinalement sur le plan (C), une source de lumière UV (33) et des distributeurs de micronutriments d'iode (34) sont situés le long du humidificateur d'air (32).

11. Échangeur de chaleur selon la revendication 5, **caractérisé en ce que** la section transversale de l'élément (13) a le point de soutien (A) situé au dessus du plan (C) et le point de soutien (B2) situé sur le plan (C), les pieds (35) de l'élément (13) étant assis dans un plateau de canal (15) avec des éléments de tension et d'étanchéité (15.1), le plateau de canal (15) étant assis indirectement sur un support d'écartement (36), de préférence sous forme d'une barre en T et / ou une autre structure porteuse.
